# EUROPÄISCHE PATENTSCHRIFT

(11) **EP 4 065 857 B1**
(45) Veröffentlichungstag und Bekanntmachung des Hinweises auf die Patenterteilung: **18.09.2024**
(21) Anmeldenummer: 20806952.6
(22) Anmeldetag: 10.11.2020
(51) Int. Cl.: F16D 55/226, F16D 65/097

(54) **SCHEIBENBREMSE FÜR EIN NUTZFAHRZEUG**
DISC BRAKE FOR A UTILITY VEHICLE
FREIN À DISQUE POUR UN VÉHICULE UTILITAIRE

(30) Priorität: 25.11.2019 DE 102019131840
(43) Veröffentlichungstag der Anmeldung: 05.10.2022
(73) Patentinhaber: KNORR-BREMSE Systeme für Nutzfahrzeuge GmbH, 80809 München (DE)
(72) Erfinder: MEISSNER, Björn, 80339 München (DE); SOMMER, Steffen, 85221 Dachau (DE); PLEINTINGER, Martin, 94428 Eichendorf (DE); WETTERER, Stefan, 80339 München (DE); PESCHEL, Michael, 82296 Schöngeising (DE)
(86) Internationale Anmeldenummer: PCT/EP2020/081679
(87) Internationale Veröffentlichungsnummer: WO 2021/104857

(56) Entgegenhaltungen:
- DE-A1- 102016 004 516
- DE-A1- 102016 124 310
- JP-A- S57 179 435
- US-A- 4 491 204

## Beschreibung

Die Erfindung betrifft eine Scheibenbremse für ein Nutzfahrzeug gemäß dem Oberbegriff des Anspruchs 1.

Im Funktionsfall, also bei einer Bremsung, erfolgt eine Zuspannung der Bremsbeläge einer solchen Schiebesattel-Scheibenbremse durch eine Zuspanneinrichtung, wobei zunächst der zuspannseitige Bremsbelag gegen die Bremsscheibe gedrückt wird und nachfolgend der gegenüberliegende, reaktionsseitige Bremsbelag an die Bremsscheibe gepresst wird.

Der aktionsseitige Bremsbelag wird dabei über Bremsstempel der Zuspanneinrichtung gegen die Bremsscheibe gepresst, während zum Andrücken des reaktionsseitigen Bremsbelages der als Schiebesattel ausgebildete Bremssattel entgegen der Zuspannrichtung des aktionsseitigen Bremsbelages verschoben wird.

Nach einem Lösen der Bremse verbleibt bei der bekannten Scheibenbremse der Bremssattel in dieser letztgenannten Position, in der die Bremsbeläge, zumindest aber der reaktionsseitige, zwar drucklos, jedoch schleifend an der Bremsscheibe anliegt.

Die dadurch im Fahrbetrieb auftretenden sogenannten Restschleifmomente führen zu einem erhöhten Kraftstoffverbrauch des Fahrzeuges ebenso wie zu einer Verringerung der Standzeit sowohl der Bremsscheibe wie auch der Bremsbeläge.

Während des Fahrbetriebs erfolgt zwar ein geringes Lösen der Bremsbeläge durch einen Taumelschlag der Bremsscheibe sowie durch Erschütterungen und Querbeschleunigungen bei Kurvenfahrten, jedoch sind diese Effekte nicht ausreichend, um das genannte Schleifen wirksam zu verhindern.

In der WO 2016/202778 A1 sowie der DE 10 2016 124310 A1 ist zur Lösung dieses Problems vorgeschlagen, eine Scheibenbremse mit eine Rückstelleinrichtung bildenden federnden Spreizelementen zu versehen, mittels derer die Bremsbeläge nach Beendigung einer Bremsung aktiv zurückgestellt, d.h., aus dem Angriffsbereich der fahrzeugseitigen Bremsscheibe gebracht werden.

Dabei ist jedem Bremsbelag ein Spreizelement zugeordnet, mit jeweils zwei Federarmen, die in die jeweilige Belagträgerplatte eingreifen.

Diese Spreizelemente sind an einem sich im Wesentlichen parallel zur Bremsscheibe erstreckenden Haltebügel befestigt, der wiederum an einem fahrzeugseitigen Bremsträger gehalten ist. Diese Konstruktion verhindert, dass Restschleifmomente entstehen, die zu einem erhöhten Verschleiß der Bremsbeläge führen.

Zwar hat sich diese Rückstelleinrichtung in der Praxis bewährt, jedoch ist sie nur mit einem relativ hohen fertigungstechnischen Aufwand zu realisieren, was der steten Forderung nach einer Kostenminimierung entgegensteht.

Aus der DE 4301621 A ist eine Scheibenbremse mit einem ortsfesten Bremsträger bekannt, der zwei Belagschächte zur Aufnahme der Bremsbeläge aufweist, wobei jeder Belagschacht in beide Umfangsrichtungen der Bremsscheibe durch Bremsträgerhörner begrenzt ist, an denen sich eine einen Reibbelag tragende Belagträgerplatte des jeweiligen Bremsbelages in Zuspannrichtung gleitend abstützt.

Zur Rückstellung der Bremsbeläge ist eine auf die Bremsbeläge axial in Bremslöserichtung einwirkende Federanordnung vorgesehen, die nach einem Lösen der Bremse ein Einstellen des Lüftspiels zwischen den Bremsbelägen und der Bremsscheibe unterstützt.

Diese Federanordnung weist zwei federnde Spreizelemente mit jeweils zwei Federarmen auf, die oberhalb des Reibbelags an der Belagträgerplatte federnd anliegen, wobei das jeweilige Spreizelement an einem ortsfesten Bauteil fixiert ist, beispielsweise am Bremsträger.

In der US 2014/033 9026 A1 ist ein Spreizelement beschrieben, umfassend einen Verriegelungsarm, der das Spreizelement mit einem Bremsbelag verbindet, einem Rückzugsarm sowie einer Vorspanneinrichtung, die zwischen dem Verriegelungsarm und dem Rückzugsarm angeordnet ist. Dabei weist die Vorspanneinrichtung spiralförmige Federschleifen auf, die während eines Bremsvorgangs Energie speichern und nach einem Lösen der Bremsung den Bremsbelag zurückziehen.

Abweichend von der Gattung betrifft diese Konstruktion keine Schiebesattel-Bremse, sondern eine Faustsattel-Bremse, die in einem Personenfahrzeug zum Einsatz kommt, für ein Nutzfahrzeug jedoch nicht geeignet ist.

In der DE 10 2016 004516 A1 ist eine Scheibenbremse offenbart mit einer Rückstelleinrichtung, die entgegen der jeweiligen Zuspanneinrichtung gleich wirkende federnde Spreizelemente aufweist, gemäß der Gattung.

Diese Spreizelemente bestehen bei einer Ausführungsvariante aus getrennten Federschenkeln, die jeweils endseitig einerseits an dem zugeordneten Bremsbelag und andererseits an der Speiche eines Belaghaltebügels, diesen umschlingend, befestigt sind.

In einer anderen Variante sind die Federschenkel jedes Spreizelementes durch einen schraubenförmig gewundenen Bereich miteinander verbunden, der eine Speiche des Belaghaltebügels umschlingt.

Von der Gattung abweichende Scheibenbremsen sind aus der US 4 491 204 A sowie der JP S57 179435 A bekannt.

Der Erfindung liegt die Aufgabe zugrunde, eine Scheibenbremse der gattungsgemäßen Art so weiterzuentwickeln, dass ihre Rückstelleinrichtung einfacher aufgebaut ist und damit kostengünstiger herstellbar und ihre Betriebssicherheit verbessert wird.

Diese Aufgabe wird durch eine Scheibenbremse mit den Merkmalen des Anspruchs 1 gelöst.

Gegenüber einer Scheibenbremse nach dem Stand der Technik bietet die erfindungsgemäße Ausbildung erhebliche Vorteile. Diese ergeben sich u.a. aus der äußerst einfachen Realisierung der Erfindung, da lediglich zwei, vorzugsweise einstückige Spreizelemente vorgesehen sind. Nach einem Lösen der Bremse werden die Bremsbeläge durch den Federdruck der beim Bremsen gespannten Federschenkel in eine Position verschoben, in der sie nicht mehr an der Bremsscheibe anliegen.

Prinzipiell können die Spreizelemente aus einem Federdraht geformt sein und sind insofern nicht nur einfach herstellbar, sondern auch hinsichtlich ihrer Standzeit verbessert. Gerade dies ist von besonderer Bedeutung, da Scheibenbremsen als sicherheitsrelevante Bauteile besonderen Anforderungen unterliegen.

Die V-förmige Formgebung jedes Spreizelementes ermöglicht deren Einsatz bei verschiedenen einzubauenden Bremsbelägen, die dazu an identischen Positionen Aufnahmemöglichkeiten für die Enden der Federschenkel aufweisen. Damit wird eine Konfektionierung der Spreizelemente möglich, was deren Beschaffungskosten deutlich reduziert.

Die erfindungsgemäße Ausbildung der Spreizelemente in V-Form ist im weitesten Sinn zu sehen, wobei jedes Spreizelement Federschenkel aufweist, die zumindest bereichsweise schräg zueinander hin zu einem gemeinsamen Verbindungsbereich verlaufen.

Dabei ist zumindest einer der Federschenkel so ausgelegt, dass er sich an einer zugeordneten Belaghaltefeder des entsprechenden Bremsbelages abstützt, um so ein Abkippen in Richtung der Bremsscheibe zu vermeiden, wobei jeder Verbindungsbereich an der Unterseite des Belaghaltebügels anliegt.

Eine alternative Ausführungsvariante sieht vor, dass jedes Spreizelement im Verbindungsbereich der Federschenkel am Haltebügel befestigt ist, beispielsweise durch Klemmmittel.

Da die Spreizelemente in die einander zugewandte Richtung ansteigend verlaufen, wird ein beim Zuspannen der Bremsbeläge sich ergebendes Aufstellen der Verbindungsbereiche durch deren Anlage an bzw. Verbindung mit dem Belaghaltebügel verhindert.

Nach einem weiteren Gedanken der Erfindung sind die Spreizelemente asymmetrisch ausgeführt und montiert, so dass sie im Fall eines Verschleißes der Bremsbeläge und der dadurch bedingten Verschiebung der Verbindungsbereiche der Spreizelemente unter dem Belaghaltebügel aneinander vorbeigleiten können.

Die Fixierung der Enden der Federschenkel an den Belagträgerplatten kann auf unterschiedliche Art und Weise erfolgen, beispielsweise durch Einstecken dieser Enden in Bohrungen der Belagträgerplatte oder der Belaghaltefeder.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1: eine Scheibenbremse nach dem Stand der Technik in einer perspektivischen Draufsicht
- Fig. 2 und 3: einen Teilausschnitt der erfindungsgemäßen Scheibenbremse in einer perspektivischen Ansicht
- Fig. 4 bis 8: eine Ausführungsvariante der Erfindung, jeweils gleichfalls in einer perspektivischen Draufsicht
- Fig. 9: eine Einzelheit der Scheibenbremse in einer schaubildlichen Darstellung
- Fig. 10: eine alternative Ausführung der Erfindung in montierter Stellung der Spreizelemente
- Fig. 11: ein weiteres Ausführungsbeispiel der Spreizelemente als Einzelheit dargestellt.

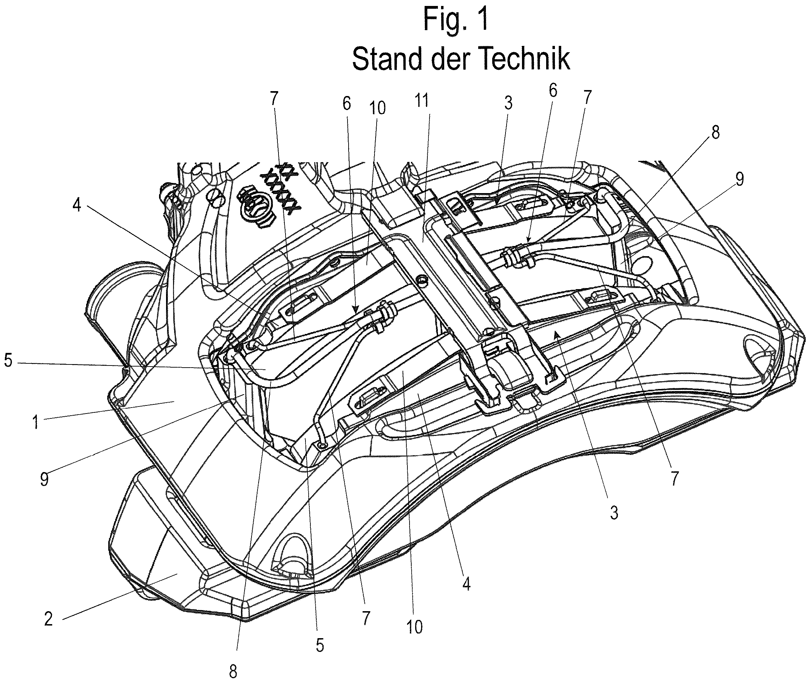

In der Fig. 1 ist eine Scheibenbremse für ein Nutzfahrzeug nach dem Stand der Technik dargestellt. Diese Scheibenbremse weist einen Bremssattel 1 auf, der an einem fahrzeugseitig befestigbaren Bremsträger 2 verschiebbar gehalten ist und in dem zwei abständig zueinander angeordnete Bremsbeläge 3 gegensinnig bewegbar gelagert sind.

Jeder Bremsbelag 3 weist eine Belagträgerplatte 4 und einen darauf befestigten Reibbelag 5 auf, wobei an den Belagträgerplatten 4 jeweils eine Belaghaltefeder 10 befestigt ist, die sich an einem Belaghaltebügel 11 abstützt, der eine Montageöffnung des Bremssattels 1 übergreift und mittels dessen die Bremsbeläge 3 unter Vorspannung in Belagschächten des Bremsträgers 2 gehalten sind, die seitlich durch Bremsträgerhörner 9 begrenzt sind.

Um die Bremsbeläge 3 nach einem Bremsvorgang in ihre Nichtfunktionsstellung zurückzuführen, ist eine Rückstelleinrichtung vorgesehen, die aus zwei Spreizelementen 6 gebildet wird, die in den den Bremsträgerhörnern 9 benachbarten Bereichen mittels Federschenkeln 7 in die Belagträgerplatten 4 angreifen.

Die Spreizelemente 6 sind andererseits an einem Haltebügel 8 als weiterem Bestandteil der Rückstelleinrichtung befestigt, der mit seinen beiden Enden jeweils in ein Bremsträgerhorn 9 eingesteckt ist. Diese bekannte Scheibenbremse ist im Übrigen, wie bereits erwähnt, in der WO 2016/202778 A1 offenbart, auf die ausdrücklich Bezug genommen wird.

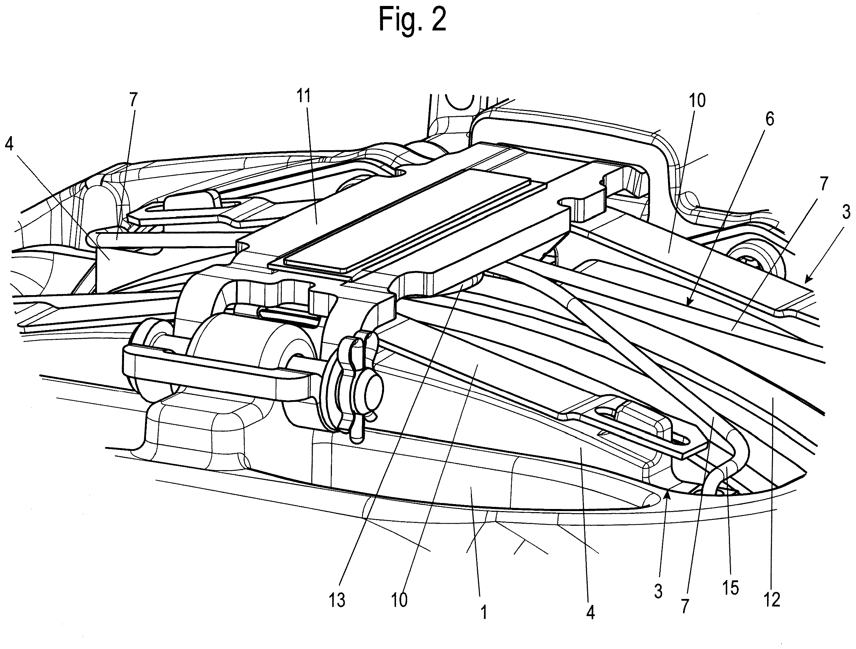

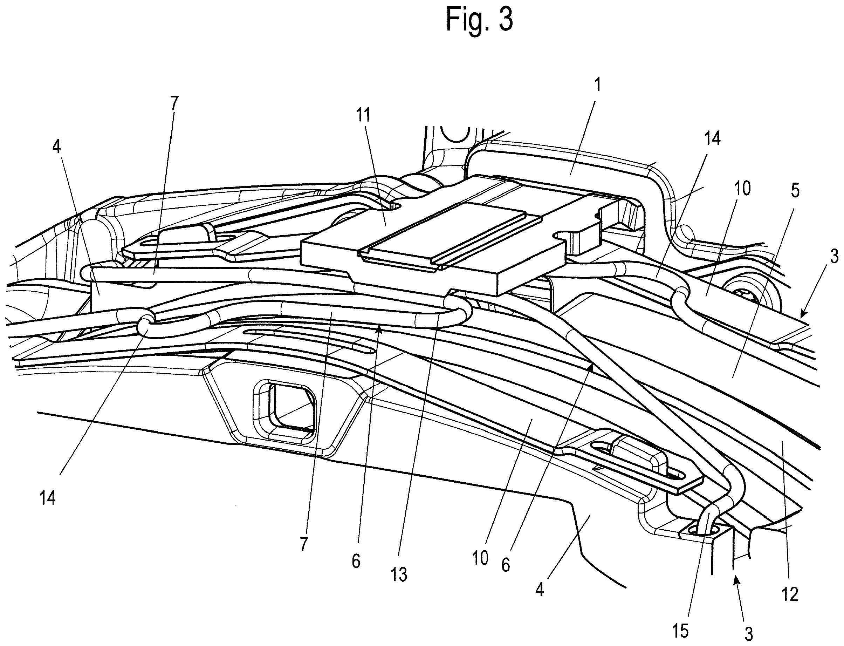

In den **Fig. 2** **und** **3** ist ein Teil einer Scheibenbremse abgebildet, bei der, gemäß der Erfindung zwei V-förmig geformte Spreizelemente 6 vorgesehen sind, die sich im Verbindungsbereich 13 ihrer jeweiligen Federschenkel 7 an der Unterseite des Belaghaltebügels 11 abstützen. Dabei sind die Federschenkel 7 jedes Spreizelementes 6 mit ihren Enden 15 an den sich gegenüberliegenden Bremsbelägen 3 gehalten, wobei in dem Beispiel nach den Figuren 2 und 3 die gegenüber den Federschenkeln 7 abgewinkelten Enden 15 in Bohrungen der Belagträgerplatte 4 eingesteckt sind.

In der Fig. 3 ist zu erkennen, dass ein, bezogen auf eine Bremsscheibe 12 bogenförmig nach außen geformtes Auflager 14 eines Federschenkels 7 des jeweiligen Spreizelementes 6 auf der Belaghaltefeder 10 des zugeordneten Bremsbelages 3 aufliegt, wodurch ein Abkippen des Spreizelementes 6 verhindert wird.

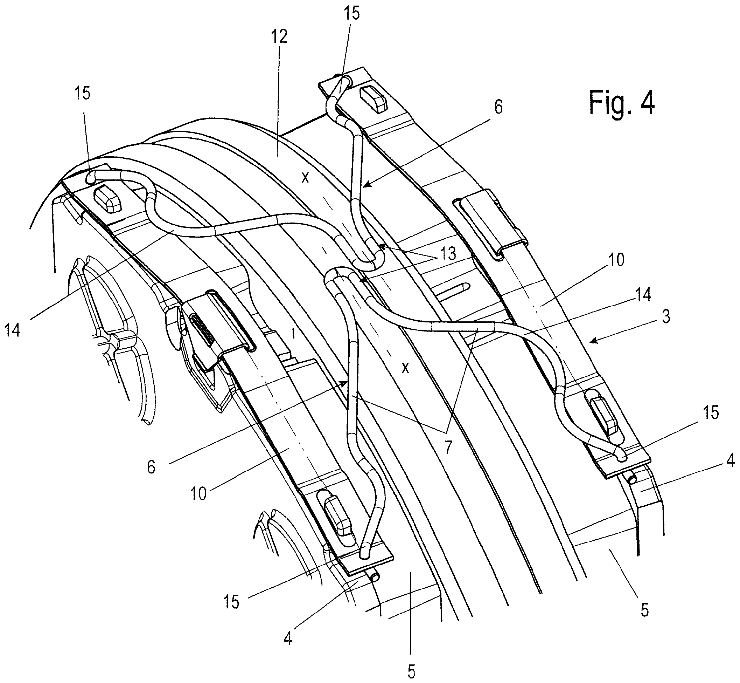

In den Fig. 4-8 ist die Baugruppe Bremsbeläge 3, Spreizelemente 6 und Bremsscheibe 12 in Alleinstellung abgebildet, also ohne Bremssattel 1 und Belaghaltebügel 11. Somit ist die Konfiguration der Spreizelemente 6 deutlich zu erkennen.

Die Fig. 4 zeigt damit die Ausbildung der Spreizelemente 6 entsprechend der Fig. 3. Im Unterschied dazu allerdings nicht unmittelbar an der Belagträgerplatte 4 befestigt, sondern in Bohrungen der Belaghaltefedern 10.

Es ist deutlich zu erkennen, dass bei dem in der Fig. 4 gezeigten Beispiel das jeweilige Auflager 14 lediglich einseitig ausgebildet ist und an der zugeordneten Belaghaltefeder 10 anliegt, wobei die Auflager 14 der beiden Spreizelemente 6 an den Belaghaltefedern 10 der sich gegenüberliegenden Bremsbeläge 3 anliegen.

Die beiden Spreizelemente 6 sind jeweils, bezogen auf eine durch den Scheitelpunkt des Verbindungsbereiches 13 geführte gedachte Längsachse X asymmetrisch ausgebildet und zwar derart, dass die beiden Verbindungsbereiche 13 der Spreizelemente 6 in montierter Stellung versetzt zueinander positioniert sind, mit Abstand der Längsachsen X zueinander.

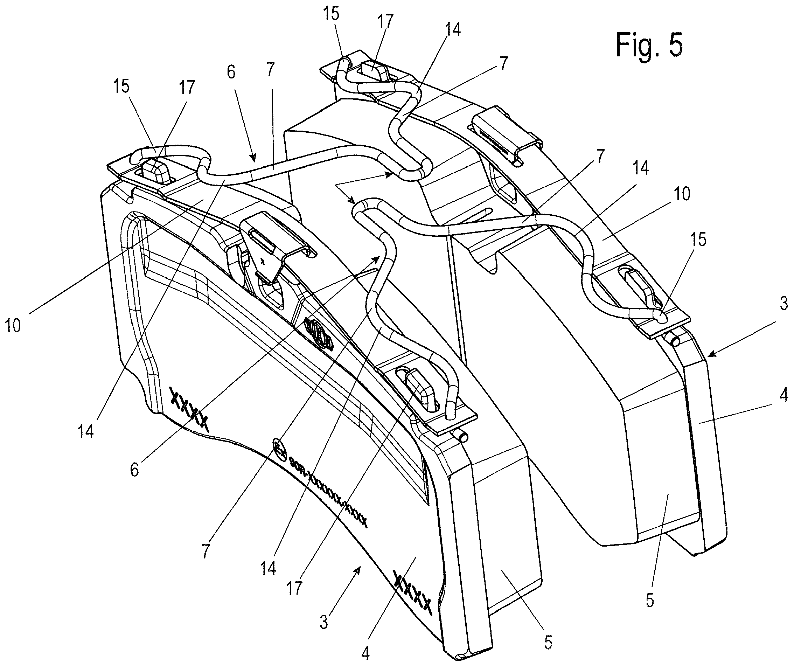

Bei dem in der **Fig.** 5 gezeigten Beispiel sind die Enden 15 der Federschenkel 7 ebenfalls in Bohrungen der Belaghaltefedern 10 eingesteckt. Bei dieser Ausführungsvariante weist jeder Federschenkel 7 ein Auflager 14 auf, das an der zugeordneten Belaghaltefeder 10 anliegt.

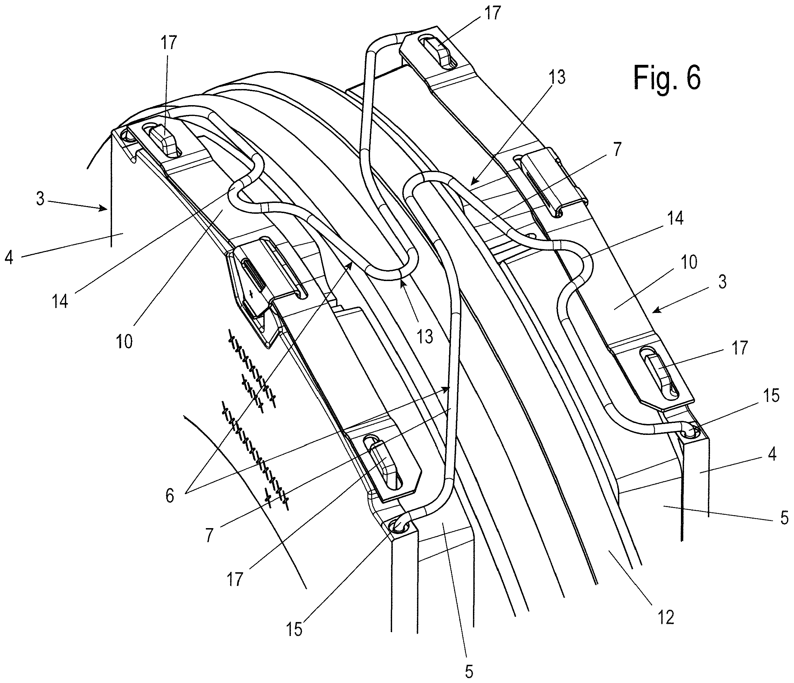

Eine der Fig. 4 vergleichbare Ausführung der Spreizelemente 6 ist in der **Fig. 6** abgebildet, d.h. mit lediglich jeweils einem Auflager 14. Allerdings sind die Enden 15 der Federschenkel 7 in Bohrungen der Belagträgerplatte 4 eingesteckt.

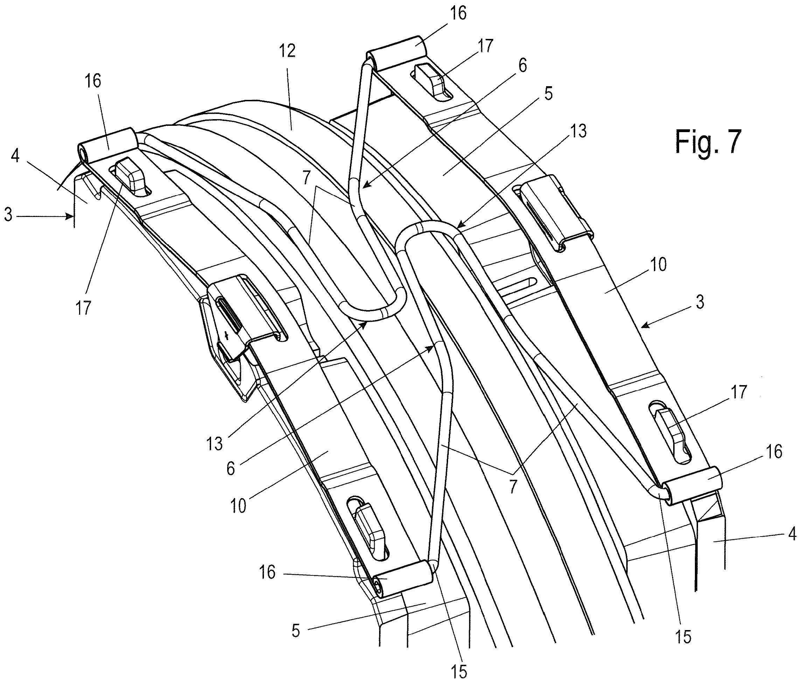

Bei dem in der **Fig.** 7 gezeigten Ausführungsbeispiel sind die Enden 15 der Federschenkel 7 in endseitig an die jeweilige Belaghaltefeder 10 angeformte Ösen 16 eingesteckt und darin verdrehsicher gehalten, so dass auf ein Auflager 14 verzichtet werden kann.

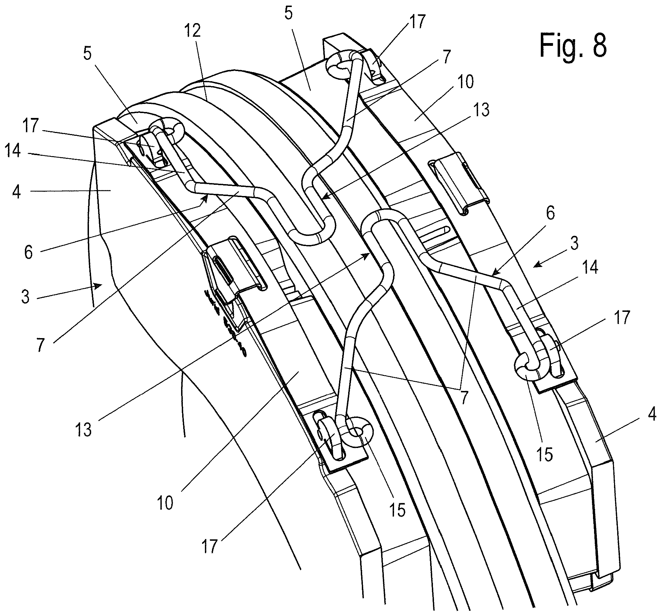

In der **Fig.** 8 ist eine weitere Variante der Anbindung der Federschenkel 7 an den Belagträgerplatten 4 erkennbar. Hierbei sind die Enden 15 derart gewunden, dass sich eine Schlaufe ergibt, die oberhalb der Belaghaltefedern 10 durch an die jeweilige Belagträgerplatte angeformte Laschen 17 geführt sind, die die Belaghaltefedern 10 durchtreten. Dabei dienen diese Enden 15 auch der radialen Sicherung der Belaghaltefeder 10 gegenüber der Belagträgerplatte 4.

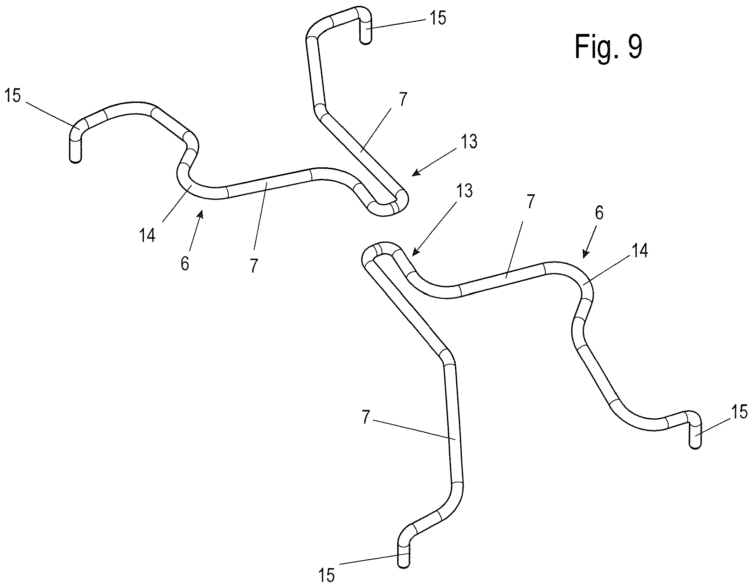

Die Spreizelemente 6 als Einzelheit sind in der **Fig.** 9 dargestellt, wobei bei diesem Ausführungsbeispiel die Auflager 14 einseitig, d. h. an einem der beiden Federschenkel 7 ausgebildet sind. Die Enden 15 sind hierbei im rechten Winkel zu den Federschenkeln 7 im Übrigen angeformt.

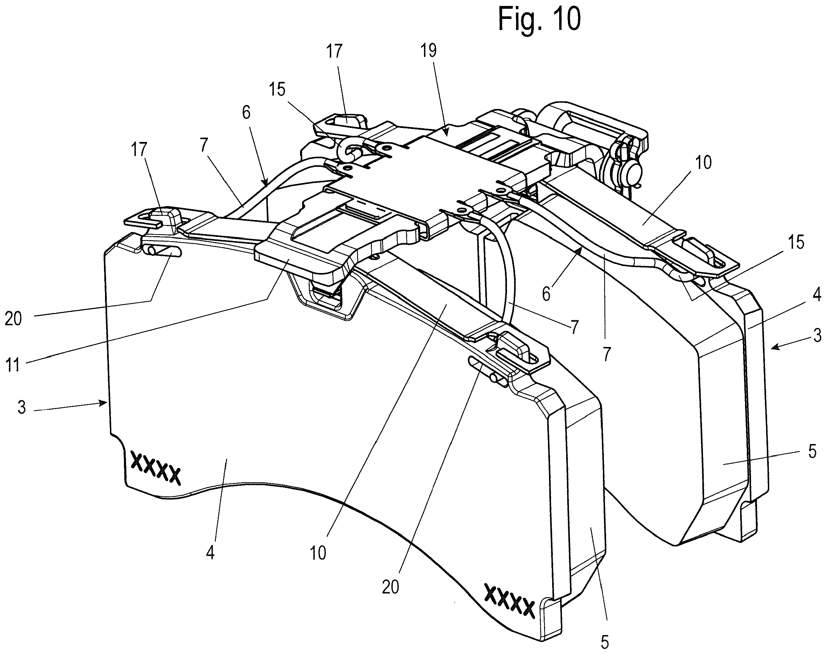

Die **Fig.** 10 zeigt eine alternative Ausbildung der Halterung der Spreizelemente 6 am Belaghaltebügel 11. Die Verbindungsbereiche 13 liegen dabei auf dem Belaghaltebügel 11 auf und sind dort durch eine Klemmeinrichtung 19 befestigt, wodurch die Spreizelemente 6 in radialer Richtung vorgespannt sind zu deren definierter Positionierung und zur Vermeidung von Geräuschen durch Vibrationen. Die Klemmeinrichtung 19 ist bevorzugt axial verschiebbar gehalten, so dass Sattelbewegungen bei Verschleiß ausgeglichen werden.

Die Enden 15 der Federschenkel 7 sind durch Langlöcher 20 der Belagträgerplatten 4 geführt, wobei die Enden 15 in Verlaufsebene der Federschenkel 7 in einem rechten Winkel abgewinkelt sind.

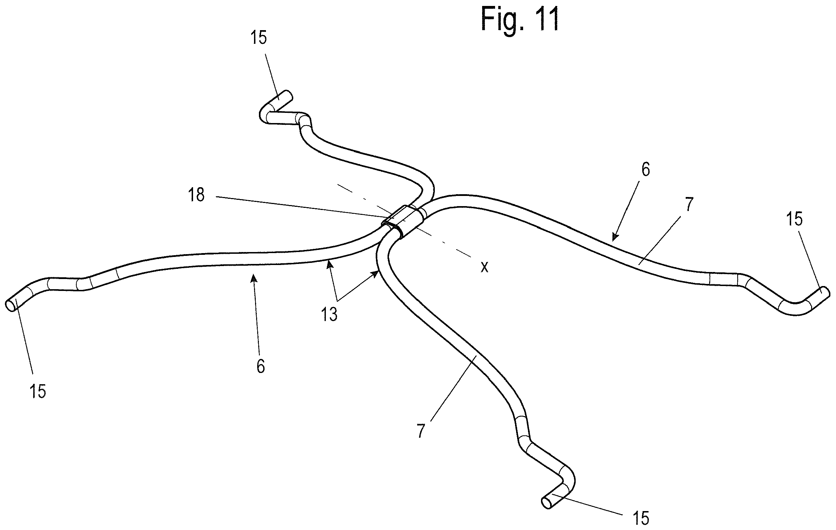

Bei dem in der Fig. 11 gezeigten weiteren Ausführungsbeispiel Beispiel der beiden Spreizelemente 6 liegen diese mit ihren Verbindungsbereichen 13 aneinander und werden durch eine Klammer 18 miteinander verbunden, wobei die Spreizelemente 6 nicht asymmetrisch, sondern symmetrisch ausgebildet sind, bezogen auf die zuvor beschriebene Längsachse X.

### Bezugszeichenliste

- 1: Bremssattel
- 2: Bremsträger
- 3: Bremsbelag
- 4: Belagträgerplatte
- 5: Reibbelag
- 6: Spreizelement
- 7: Federschenkel
- 8: Haltebügel
- 9: Bremsträgerhorn
- 10: Belaghaltefeder
- 11: Belaghaltebügel
- 12: Bremsscheibe
- 13: Verbindungsbereich
- 14: Auflager
- 15: Ende
- 16: Öse
- 17: Lasche
- 18: Klammer
- 19: Klemmeinrichtung
- 20: Langloch

## Patentansprüche

1. Scheibenbremse für ein Nutzfahrzeug, mit einem eine Bremsscheibe (12) übergreifenden, als Schiebesattel ausgebildeten Bremssattel (1), zwei darin angeordneten, in Richtung der Bremsscheibe (12) gegensinnig bewegbaren, jeweils eine Belagträgerplatte (4) und einen darauf befestigten Reibbelag (5) aufweisende Bremsbeläge (3), die jeweils unter Vorspannung mittels einer Belaghaltefeder (10), an der sich ein am Bremssattel (1) gehaltener und eine Montageöffnung des Bremssattels (1) überspannender Belaghaltebügel (11) abstützt, in einem in Drehrichtung der Bremsscheibe (12) durch Bremsträgerhörner (9) begrenzten Belagschacht eines fahrzeugseitigen Bremsträgers (2) angeordnet sind, sowie mit einer Rückstelleinrichtung, mit der die Bremsbeläge (3) nach einem bremsbedingten Verschieben und Lösen der Bremse rückführbar sind, wobei die Rückstelleinrichtung an den sich gegenüberliegenden Bremsbelägen (3) angreifende, entgegen der jeweiligen Zuspannrichtung gleich wirkende federnde Spreizelemente (6) aufweist,
**dadurch gekennzeichnet, dass**
zwei V-förmig geformte Spreizelemente (6) vorgesehen sind, die sich im Verbindungsbereich (13) ihrer jeweiligen Federschenkel (7) am Belaghaltebügel (11) abstützen oder daran befestigt sind, wobei die Federschenkel (7) jedes Spreizelementes (6) mit ihren Enden (15) an den sich gegenüberliegenden Bremsbelägen (3) gehalten sind.

2. Scheibenbremse nach Anspruch 1,
**dadurch gekennzeichnet, dass**
zumindest ein Federschenkel (7) ein nach außen geformtes Auflager (14) aufweist, das auf dem zugeordneten Bremsbelag (3) aufliegt.

3. Scheibenbremse nach Anspruch 1 oder 2,
**dadurch gekennzeichnet, dass**
jedes Spreizelement (6), bezogen auf eine durch den Scheitelpunkt des Verbindungsbereichs (13) gedacht geführte Längsachse (X) asymmetrisch ausgebildet ist.

4. Scheibenbremse nach einem der vorhergehenden Ansprüche,
**dadurch gekennzeichnet, dass**
die Verbindungsbereiche (13) der beiden Spreizelemente (6), bezogen auf ihre Längsachsen (X) versetzt zueinander angeordnet sind.

5. Scheibenbremse nach einem der vorhergehenden Ansprüche,
**dadurch gekennzeichnet, dass**
die Spreizelemente (6) einstückig aus einem Draht, vorzugsweise einem Federdraht, geformt sind.

6. Scheibenbremse nach einem der vorhergehenden Ansprüche,
**dadurch gekennzeichnet, dass**
jedes Ende (15) der Federschenkel (7) abgewinkelt zum Verlauf des benachbarten Bereichs des Federschenkels (7) ist.

7. Scheibenbremse nach einem der vorhergehenden Ansprüche,
**dadurch gekennzeichnet, dass**
jedes Ende (15) in eine Bohrung der Belaghaltefeder (10) eingesteckt ist.

8. Scheibenbremse nach einem der vorhergehenden Ansprüche,
**dadurch gekennzeichnet, dass**
jedes Ende (15) des Federschenkels (7) in eine Bohrung der Belagträgerplatte (4) eingesteckt ist.

9. Scheibenbremse nach einem der vorhergehenden Ansprüche,
**dadurch gekennzeichnet, dass**
das Ende (15) des jeweiligen Federschenkels (7) in eine Bohrung einer Lasche (17) der Belagträgerplatte (4) eingesteckt ist, die ein Langloch der Belaghaltefeder (10) durchtritt.

10. Scheibenbremse nach einem der vorhergehenden Ansprüche,
**dadurch gekennzeichnet, dass**
das Ende (15) des jeweiligen Federschenkels (7) in eine angeformte Öse (16) der Belaghaltefeder (10) eingesteckt ist.

11. Scheibenbremse nach einem der vorhergehenden Ansprüche,
**dadurch gekennzeichnet, dass**
das Ende (15) jedes Federschenkels (7) schlaufenförmig gebogen ist und in eine Bohrung der Lasche (17) eingesteckt ist.

12. Scheibenbremse nach einem der vorhergehenden Ansprüche,
**dadurch gekennzeichnet, dass**
die Verbindungsbereiche (13) der beiden Spreizelemente (6) aneinander liegen.

13. Scheibenbremse nach einem der vorhergehenden Ansprüche,
**dadurch gekennzeichnet, dass**
die aneinander liegenden Verbindungsbereiche (13) miteinander verbunden sind, vorzugsweise durch eine Klammer (18).

14. Scheibenbremse nach einem der vorhergehenden Ansprüche,
**dadurch gekennzeichnet, dass**
die Spreizelemente (6), bezogen auf die gedachte Längsachse (X) spiegelsymmetrisch ausgebildet sind.

15. Scheibenbremse nach einem der vorhergehenden Ansprüche,
**dadurch gekennzeichnet, dass**
die Spreizelemente (6) mit ihren Verbindungsbereichen (13) an dem Belaghaltebügel (11) befestigt sind.

16. Scheibenbremse nach einem der vorhergehenden Ansprüche,
**dadurch gekennzeichnet, dass**
die Verbindungsbereiche (13) auf dem Belaghaltebügel (11) aufliegen.

17. Scheibenbremse nach einem der vorhergehenden Ansprüche,
**dadurch gekennzeichnet, dass**
die auf dem Belaghaltebügel (11) aufliegenden Verbindungsbereiche (13) mittels einer Klemmeinrichtung (19) am Belaghaltebügel (11) befestigt sind.

## Claims

1. Disc brake for a utility vehicle, with a brake caliper (1) engaging over a brake disc (12) and configured as a sliding caliper, two brake pads (3) which are arranged therein and can move in opposite directions in the direction of the brake disc (12), the brake pads (3) each having a pad support plate (4) and a friction pad (5) attached thereto, which are each under preloading by means of a pad retaining spring (10), on which a pad retaining bracket (11) held on the brake caliper (1) and spanning a mounting opening of the brake caliper (1) is supported, are arranged in a pad shaft of a brake carrier (2) on the vehicle side, which shaft is delimited in the direction of rotation of the brake disc (12) by brake carrier horns (9), and with a resetting device with which the brake pads (3) can be returned after a brake-related displacement and release of the brake, wherein the resetting device has resilient spreading elements (6) which act on the opposing brake pads (3) and act in the same way against the respective clamping direction,
**characterised in that**
two V-shaped spreading elements (6) are provided which are supported in the connecting region (13) of their respective spring legs (7) on the pad retaining bracket (11) or are secured thereto, wherein the spring legs (7) of each spreading element (6) are held at their ends (15) on the opposing brake pads (3).

2. Brake disc according to claim 1,
**characterised in that**
at least one spring leg (7) has an outwardly shaped support (14), which bears on the associated brake pad (3).

3. Disc brake according to claim 1 or 2,
**characterised in that**
each spreading element (6) is asymmetrical in relation to a longitudinal axis (X) passing through the apex of the connecting region (13).

4. Disc brake according to any one of the preceding claims,
**characterised in that**
the connecting regions (13) of the two spreading elements (6) are arranged offset to one another with respect to their longitudinal axes (X).

5. Disc brake according to any one of the preceding claims,
**characterised in that**
the spreading elements (6) are formed in one piece from a wire, preferably a spring wire.

6. Disc brake according to any one of the preceding claims,
**characterised in that**
each end (15) of the spring leg (7) is angled with respect to the course of the adjacent region of the spring leg (7).

7. Disc brake according to any one of the preceding claims,
**characterised in that**
each end (15) is inserted into a bore of the pad retaining spring (10).

8. Disc brake according to any one of the preceding claims,
**characterised in that**
each end (15) of the spring leg (7) is inserted into a bore of the pad support plate (4).

9. Disc brake according to any one of the preceding claims,
**characterised in that**
the end (15) of the respective spring leg (7) is inserted into a bore of a tab (17) of the pad carrier plate (4), which passes through an elongated hole of the pad retaining spring (10).

10. Disc brake according to any one of the preceding claims,
**characterised in that**
the end (15) of the respective spring leg (7) is inserted into a formed eyelet (16) of the pad retaining spring (10).

11. Disc brake according to any one of the preceding claims,
**characterised in that**
the end (15) of each spring leg (7) is bent in the form of a loop and is inserted into a bore of the tab (17).

12. Disc brake according to any one of the preceding claims,
**characterised in that**
the connecting regions (13) of the two spreading elements (6) bear against one another.

13. Disc brake according to any one of the preceding claims,
**characterised in that**
the connecting regions (13) bearing against one another are connected to one another, preferably by a clamp (18).

14. Disc brake according to any one of the preceding claims,
**characterised in that**
the spreading elements (6) are configured to be mirror-symmetrical in relation to the imaginary longitudinal axis (X).

15. Disc brake according to any one of the preceding claims,
**characterised in that**
the spreading elements (6) are secured with their connecting regions (13) to the pad retaining bracket (11).

16. Disc brake according to any one of the preceding claims,
**characterised in that**
the connecting regions (13) bear on the pad retaining bracket (11).

17. Disc brake according to any one of the preceding claims,
**characterised in that**
the connecting regions (13) resting on the pad retaining bracket (11) are secured by means of a clamping device (19) to the pad retaining bracket (11).

## Revendications

1. Frein à disque pour un véhicule utilitaire, avec un étrier de frein (1) conçu en tant qu'étrier coulissant s'engageant avec un disque de frein (12), deux garnitures de frein disposées dans celui-ci et mobiles en sens inverse en direction du disque de frein (12), des garnitures de frein (3) présentant respectivement une plaque de support de garniture (4) et une garniture de friction (5) fixée sur celle-ci, qui sont respectivement disposées sous précontrainte au moyen d'un ressort de maintien de garniture (10), sur lequel s'appuie un étrier de maintien de garniture (11) maintenu sur l'étrier de frein (1) et recouvrant une ouverture de montage de l'étrier de frein (1), dans un puits de garniture d'un support de frein (2) côté véhicule, limité dans le sens de rotation du disque de frein (12) par des cornes de support de frein (9), ainsi qu'avec un dispositif de rappel, avec lequel les garnitures de frein (3) peuvent être ramenées après un déplacement et un desserrage du frein dus au freinage, dans lequel le dispositif de rappel présente des éléments d'écartement à ressort (6) agissant de la même manière à l'opposé de la direction de serrage respective agissant sur les garnitures de frein opposées (3),
**caractérisé en ce que**
deux éléments d'écartement (6) en forme de V sont prévus, qui s'appuient dans la zone de connexion (13) de leurs branches de ressort (7) respectives sur l'étrier de maintien de garniture (11) ou sont fixés sur celui-ci, dans lequel les branches de ressort (7) de chaque élément d'écartement (6) sont maintenues par leurs extrémités (15) sur les garnitures de frein opposées (3).

2. Frein à disque selon la revendication 1,
**caractérisé en ce que**
au moins une branche de ressort (7) présente un support (14) formé vers l'extérieur, qui repose sur la garniture de frein (3) associée.

3. Frein à disque selon la revendication 1 ou 2,
**caractérisé en ce que**
chaque élément d'écartement (6) est conçu de manière asymétrique par rapport à un axe longitudinal (X) guidé par le sommet de la zone de connexion (13).

4. Frein à disque selon l'une quelconque des revendications précédentes,
**caractérisé en ce que**
les zones de connexion (13) des deux éléments d'écartement (6) sont disposées de manière décalée l'une à l'autre par rapport à leurs axes longitudinaux (X).

5. Frein à disque selon l'une quelconque des revendications précédentes,
**caractérisé en ce que**
les éléments d'écartement (6) sont formés d'un seul tenant à partir d'un fil, de préférence un fil à ressort.

6. Frein à disque selon l'une quelconque des revendications précédentes,
**caractérisé en ce que**
chaque extrémité (15) de la branche de ressort (7) est coudée par rapport au tracé de la zone adjacente de la branche de ressort (7).

7. Frein à disque selon l'une quelconque des revendications précédentes,
**caractérisé en ce que**
chaque extrémité (15) est insérée dans un alésage du ressort de maintien de garniture (10).

8. Frein à disque selon l'une quelconque des revendications précédentes,
**caractérisé en ce que**
chaque extrémité (15) de la branche de ressort (7) est insérée dans un alésage de la plaque de support de garniture (4).

9. Frein à disque selon l'une quelconque des revendications précédentes,
**caractérisé en ce que**
l'extrémité (15) de chaque branche de ressort (7) est insérée dans un alésage d'une attache (17) de la plaque de support de garniture (4), qui traverse un trou oblong du ressort de maintien de garniture (10).

10. Frein à disque selon l'une quelconque des revendications précédentes,
**caractérisé en ce que**
l'extrémité (15) de chaque branche de ressort (7) est insérée dans un anneau (16) formé sur le ressort de maintien de garniture (10).

11. Frein à disque selon l'une quelconque des revendications précédentes,
**caractérisé en ce que**
l'extrémité (15) de chaque branche de ressort (7) est courbée en forme de boucle et est insérée dans un alésage de l'attache (17).

12. Frein à disque selon l'une quelconque des revendications précédentes,
**caractérisé en ce que**
les zones de connexion (13) des deux éléments d'écartement (6) sont adjacentes l'une à l'autre.

13. Frein à disque selon l'une quelconque des revendications précédentes,
**caractérisé en ce que**
les zones de connexion (13) adjacentes sont reliées l'une à l'autre, de préférence par une agrafe (18).

14. Frein à disque selon l'une quelconque des revendications précédentes,
**caractérisé en ce que**
les éléments d'écartement (6) sont conçus en symétrie de miroir par rapport à l'axe longitudinal imaginaire (X).

15. Frein à disque selon l'une quelconque des revendications précédentes,
**caractérisé en ce que**
les éléments d'écartement (6) sont fixés par leurs zones de connexion (13) à l'étrier de maintien de garniture (11).

16. Frein à disque selon l'une quelconque des revendications précédentes,
**caractérisé en ce que**
les zones de connexion (13) reposent sur l'étrier de maintien de garniture (11).

17. Frein à disque selon l'une quelconque des revendications précédentes,
**caractérisé en ce que**
les zones de connexion (13) reposant sur l'étrier de maintien de garniture (11) sont fixées à l'étrier de maintien de garniture (11) au moyen d'un dispositif de serrage (19).
